# EUROPÄISCHE PATENTSCHRIFT

(11) **EP 1 221 641 B1**
(45) Veröffentlichungstag und Bekanntmachung des Hinweises auf die Patenterteilung: **30.04.2008**
(21) Anmeldenummer: 01129876.7
(22) Anmeldetag: 14.12.2001
(51) Int. Cl.: G05B 19/418

(54) **Industrielle Steuerung mit taktsynchronem Ablaufebenenmodell**
Industrial control with clock synchronised scheduling-model
Commande industrielle avec un modèle à niveaux de fonctionnements à synchronisation d'horloge

(30) Priorität: 27.12.2000 DE 10065419
(43) Veröffentlichungstag der Anmeldung: 10.07.2002
(73) Patentinhaber: SIEMENS AKTIENGESELLSCHAFT, 80333 München (DE)
(72) Erfinder: Amrhein, Armin, 92245 Kümmersbruck (DE); Birzer, Johannes, 92551 Stulln (DE); Kiesel, Martin, 91099 Poxdorf (DE); Schmitt, Regina, 91056 Erlangen (DE)

(56) Entgegenhaltungen:
- DE-A1- 19 740 550
- US-A- 5 768 119

## Beschreibung

Die Erfindung bezieht sich auf eine industrielle, mit einem Runtime-System ausgestattete Steuerung, insbesondere für Produktionsmaschinen, wobei das Runtime-System ein Ablaufebenenmodell enthält, das mehrere Ablaufebenen unterschiedlichen Typs mit unterschiedlicher Priorität aufweist, wobei eine Ebenengruppe des Runtime-Systems aus einem Grundtakt abgeleitete synchron getaktete Ebenen enthält.

Ferner bezieht sich die Erfindung auf die Erstellung eines Runtime-Systems einer industriellen Steuerung mit synchron getakteten System- und Anwenderebenen.

Es ist heutzutage üblich, sowohl für die speicherprogrammierbare Steuerung (SPS) als auch für die Bewegungssteuerung (MC) jeweils unterschiedliche hierarchische Ablaufebenen zu modellieren, denen Software-Tasks zur Steuerung des jeweiligen technischen Prozesses zugeordnet werden. Diese Tasks können Systemaufgaben erfüllen, sie können aber auch anwenderprogrammiert sein.

Aus DE 197 40 550 A1 ist es bekannt, dass Prozesssteuerungsfunktionalitäten der speicherprogrammierbaren Steuerungen "SPS" und Bewegungsfunktionalitäten von MC-Steuerungen in einem einheitlichen konfigurierbaren Steuerungssystem integriert werden können.

Diese SPS/MC-Integration geschieht in Form des Zusammenschaltens von SPS- und MC-Steuerungsbaugruppen. Bei einer solchen Ausführung der Integration wird aber keine optimale und effiziente Taskstruktur für die Gesamtheit der Steuerungsaufgaben erreicht. Außerdem werden bei dieser Art der Integration hauptsächlich die klassischen MC-Funktionalitäten, wie sie insbesondere für Werkzeugmaschinen relevant sind, unterstützt. Anforderungen an die Steuerung, wie sie aus dem Betrieb von Produktionsmaschinen bekannt sind, werden durch diese Art des Zusammenschaltens von SPS- und MC-Steuerungsbaugruppen nicht optimal unterstützt.

In der Anmeldung DE 19 93 19 33.2 wird vorgeschlagen, den Takt des Kommunikationssystems zwischen dem PC-System und den peripheren Geräten für einen Wechsel zwischen einem Echtzeitbetriebsprogramm und einem Nicht-Echtzeitbetriebsprogramm heranzunehmen. Hier ist es aber die Aufgabe dieser Taktabgreifung aus dem Kommunikationssystem, in einem industriellen Prozess einen möglichst reibungslosen Wechsel zwischen Echtzeit- und Nicht-Echtzeitanwendungen stattfinden zu lassen. Bei dieser Ausgestaltung wird der Grundtakt aber nur aus dem Takt des Kommunikationsmediums abgeleitet und er wird nur für den Wechsel des Betriebssystemmodus eines PC-Systems verwendet.

Der Erfindung liegt daher die Aufgabe zugrunde, für jeweils unterschiedliche Steuerungsaufgaben und unterschiedliche Randbedingungen bzw. Anforderungen des zugrunde liegenden technischen Prozesses in einfacher Weise optimale Ausprägungen einer industriellen Steuerung zu erstellen, die sowohl SPS- als auch MC-Funktionalität zur Verfügung stellt und somit auch für die Steuerung von Produktionsmaschinen geeignet ist.

Diese optimalen Ausprägungen werden prinzipiell durch ein einheitliches konfigurierbares Ablaufebenenmodell für die Steuerungs-Tasks der industriellen Steuerung erreicht.

Von diesem Ansatz ausgehend wird die oben genannte Aufgabe dadurch gelöst, dass das Runtime-System der industriellen Steuerung ein Ablaufebenenmodell enthält, das mehrere Ablaufebenen unterschiedlichen Typs mit unterschiedlicher Priorität aufweist, wobei folgende Ablaufebenen vorgesehen sind:
a) eine Ebenengruppe mit aus einem Grundtakt abgeleiteten synchron getakteten Ebenen, bestehend aus mindestens einer Systemebene und mindestens einer Anwenderebene, wobei die Ebenen dieser Ebenengruppe untereinander eine Priorisierung aufweisen können,
b) einer Anwenderebene für Systemexceptions, in der System Interrupts überwacht werden, bei deren Eintreffen Ausnahmefallbehandlungen generiert werden,
c) einer ereignisgesteuerten Anwenderebene, in der nach Erkennen eines User Interrupts User Interrupt Tasks aktiviert werden,
d) einer zeitgesteuerten Anwenderebene, deren Tasks zeitgesteuert aktiviert werden,
e) einer sequentiellen Anwenderebene, in der Motion Tasks durchlaufen werden,
f) einer zyklischen Anwenderebene, welche eine Background Task beinhaltet.

Ein wesentlicher Vorteil dieser Schichtung liegt darin, dass die Kommunikation zwischen den Tasks der Prozesssteuerung (SPS) und denen der Bewegungssteuerung (MC) minimiert wird. Ein weiterer Vorteil liegt darin, dass die Programmierung der Steuerungsaufgaben für die Prozesssteuerung und für die Bewegungssteuerung in einer einheitlichen Programmiersprache mit einer einheitlichen Erstelloberfläche erfolgen kann und dass der Anwender ein für seine jeweiligen Anforderungen zugeschnittenes Ablaufebenenmodell flexibel erstellen kann.

Eine erste Ausgestaltung der vorliegenden Erfindung liegt darin, dass der Grundtakt des Ablaufebenenmodells entweder aus einem internen Timer der industriellen Steuerung oder aus einem internen Takt eines Kommunikationsmediums oder aus einem externen Gerät oder von einer Größe, die zum technologischen Prozess gehört, ableitbar ist. Dadurch kann sehr flexibel und sehr einfach der Grundtakt für das Ablaufebenenmodell abgeleitet werden. Dadurch, dass der Grundtakt für das Ablaufebenenmodell auch von einer Größe, die zum technologischen Prozess gehört, ableitbar ist, kann auf eine sehr einfache Weise eine direkte Rückkopplung aus dem technologischen Prozess zur Steuerung erhalten werden.

Eine weitere vorteilhafte Ausgestaltung der Erfindung liegt darin, dass die ereignisgesteuerte Anwenderebene, die zeitgesteuerte Anwenderebene, die sequentielle Anwenderebene, die zyklische Anwenderebene und die Anwenderebene für System Exceptions optional sind. Der Anwender kann sich dadurch sehr flexibel eine Steuerung erstellen, die für seine konkreten vorliegenden Anforderungen sehr effizient ist und die die gerade benötigten Ablaufebenen enthält und somit keinen unnötigen Overhead beinhaltet.

Eine weitere vorteilhafte Ausgestaltung der Erfindung liegt darin, dass die synchronen Ebenen entweder zum Grundtakt übersetzt oder untersetzt oder im Verhältnis 1:1 getaktet sind. Dadurch können die Ebenen jeweils sehr leicht zu einem Vielfachen des Grundtaktes getaktet werden oder aber auch jeweils zu einem reziproken Vielfachen getaktet werden. Ausgehend von einer gemeinsamen Ausgangsgröße können somit sehr einfach Übersetzungen, aber auch Untersetzungen für die jeweiligen Ebenen erreicht werden.

Eine weitere vorteilhafte Ausgestaltung der Erfindung liegt darin, dass weitere priorisierende Schichtungen innerhalb der Ablaufebenen vorgesehen sind. Die Softwarestruktur der industriellen Steuerung lässt sich dadurch optimal an die unterschiedlichen Steuerungsaufgaben bzw. an die Anforderungen des zugrunde liegenden technischen Prozesses anpassen. Somit lassen sich z.B. unterschiedliche Fehlerursachen unterschiedlichen Ebenen mit z.B. aufsteigender Priorität zuordnen.

Eine weitere vorteilhafte Ausgestaltung der Erfindung liegt darin, dass optional Anwender-Tasks beim Systemhochlauf und/oder beim Systemrunterfahren durchlaufbar sind. Dadurch können beim Systemhochlauf z.B. Initialisierungsfunktionen angestoßen werden oder beim Systemrunterfahren kann durch Anwenderprogrammierung sichergestellt werden, dass die im System vorhandenen Achsen eine definierte Position einnehmen.

Eine weitere vorteilhafte Ausgestaltung der Erfindung liegt darin, dass in die Anwenderebenen Anwenderprogramme ladbar sind. Dadurch kann der Anwender in seinen Anwenderprogrammen die Funktionalität der Steuerung sehr flexibel an die zugrunde liegenden Anforderungen des technischen Prozesses anpassen und er kann auch die Anwenderprogramme in unterschiedliche Anwenderebenen laden, um dadurch eine für seine jeweiligen Applikationen effektive Ausprägung der Steuerung zu erreichen.

Eine weitere vorteilhafte Ausgestaltung der Erfindung liegt darin, dass die Anwenderprogramme je nach Typ der Anwenderebene zyklusorientiert oder sequentiell programmiert sind. Der Anwender kann somit in ein einheitliches Ablaufebenenmodell bzw. Runtime-System einer industriellen Steuerung sowohl zyklusorientierte Anwenderprogramme (z.B typische SPS-Funktionalität) als auch sequentielle bzw. ablauforientierte Anwenderprogramme (z.B. typische Bewegungs-Funktionalität) laden. Ein Anwender kann somit nach unterschiedlichen Paradigmen programmierte Programme (zyklusorientiert für SPS-Funktionalität und sequentiell bzw. ablauforientiert für Bewegungsfunktionalität) sehr flexibel und konform in die Anwenderebenen des Ablaufebenenmodells hinzuladen. Zyklusorientierte Programme sind typischerweise zykluszeitüberwacht.

Eine weitere vorteilhafte Ausgestaltung der Erfindung liegt darin, dass durch das Hinzuladen von Technologiepaketen in die Systemebenen die technologische Funktionalität der Steuerung erweiterbar ist. Damit kann der Anwender ausgehend von einem Basissystem der Steuerung den Befehlsvorrat dieses Basissystems dynamisch zugeschnitten auf die jeweiligen Erfordernissen des zugrundeliegenden technologischen Prozesses oder der Steuerungsaufgabe erweitern. Das Basissystem bildet hierbei den Auslieferungsumfang des Run-Time-Systems einer Steuerung, nämlich ein Echtzeitbetriebssystem, ein Ablaufsystem (mit System- und Anwenderebenen), Sprachbefehle, den SPS-Befehlsvorrat sowie Kommunikations- (z.B. LAN, E/A) und technologische Schnittstellen (z.B. Antriebe, Geber) zum technischen Prozeß. Im Basissystem befindet sich somit die notwendige Grundfunktionalität einer Steuerung. Das Basissystem ist dabei auf unterschiedlichsten HW-Plattformen (z.B. PC-based, Drive-based, Controller-based) ablauffähig. Durch das Zuladen von Technologiepaketen hat ein Anwender somit die Möglichkeit einer Skalierung des Run-Time-Systems der Steuerung.

Eine weitere vorteilhafte Ausgestaltung der Erfindung liegt, dass Mechanismen bereitgestellt sind, die es einem Anwender ermöglichen, im Programmzyklus auf eine beliebige Bedingung zu warten, wobei bei Erfülltsein der Bedingung der Programmfluss unmittelbar fortsetzbar ist, bei Nichterfülltsein der Bedingung der Programmfluss so lange angehalten wird, bis das Erfülltsein der Bedingung festgestellt wird, wobei beim Warten auf das Erfülltsein der Bedingung die Priorität der Bedingungsüberprüfung im Vergleich zur aktuellen Taskpriorität erhöht wird. Durch diesen Mechanismus wird es ermöglicht, eine zusammengehörige und geschlossene Aufgabenstellung in einem Stück Code eines Anwenderprogrammes auszudrücken, ohne dass weitere Mechanismen wie z.B. Event-Handler erforderlich sind. Dadurch wird einerseits in der Steuerung Verwaltungs-Overhead vermieden, was direkt die System-Performance erhöht und andererseits aus programmiertechnischer Sicht das Lokalitätsprinzip unterstützt, wodurch z.B. das Debugging erleichtert wird.

Der beschriebene Mechanismus und der dazugehörige Befehl werden im Weiteren als "wait_for-condition" bezeichnet.

Eine weitere vorteilhafte Ausgestaltung der Erfindung liegt darin, dass für die Formulierung der Bedingungen Prozesssignale, interne Signale der Steuerung und Variablen aus Anwenderprogrammen verwendbar sind. Dadurch ist es dem Anwender möglich, bei der Beschreibung der Bedingungen Prozesssignale, interne Steuerungssignale oder Anwendervariablen in einer einheitlichen Weise zu verbinden.

Eine weitere vorteilhafte Ausgestaltung der Erfindung liegt darin, dass verschiedene Ablaufebenen zur Verfügung stehen, die in Vielfachen eines Grundtaktes abgearbeitet werden, wobei technologische Funktionen den Ablaufebenen frei zugeordnet werden. Achsen und technologische Abläufe erfordern unterschiedliche Genauigkeit und Reaktionsfähigkeit. Sie können daher unterschiedlichen Taktrastern (z.B. eine Achse wird im 1 ms Takt gerechnet, eine andere im 2 ms Takt). Im Sinne einer geringeren Gesamtbelastung des Runtime-Systems bzw. des gesamten Systems werden durch die vorliegende Ausgestaltung die entsprechenden Tasks nur so hochprior bearbeitet, wie notwendig.

Eine weitere vorteilhafte Ausgestaltung der Erfindung liegt darin, dass das Runtime-System der Steuerung ein Ablaufebenenmodell enthält, das mehrere Ablaufebenen unterschiedlichen Typs mit unterschiedlicher Priorität aufweist, wobei folgende Ablaufebenen vorgesehen sind:
a) Eine Ebene, die bei Technologiefehlern aktiviert wird,
b) eine Ebene, die bei Zykluszeitüberwachung der Hintergrund-Tasks aktiviert wird,
c) eine Ebene, die bei Programmfehlern aktiviert wird,
d) eine Ebene, die bei Systemfehlern aktiviert wird,
e) eine Ebene, die bei Fehlern oder Alarmen in der Peripherie aktiviert wird,
f) eine Ebene, die beim Ansprechen von Zeitüberwachungen aktiviert wird,
g) mindestens eine Ebene, die beim Erkennen von Anwender-Interrupts aktiviert wird,
h) eine Interpolatorebene,
i) mindestens eine Ebene für Timer-Interrupts,
j) mindestens eine Ebene für die, vorzugsweise sequentielle, Abarbeitung von Bewegungs-Tasks und
k) eine Ebene für die Hintergrund-Bearbeitung,
wobei weitere Anwender-Tasks beim Systemhochlauf und/oder beim Systemrunterfahren durchlaufen werden. Durch diese Ausgestaltung der Ablaufebenenstruktur wird insbesondere ein sehr effizientes Runtime-System für industrielle Steuerungen für Produktionsmaschinen erreicht.

Eine weitere vorteilhafte Ausgestaltung der Erfindung liegt darin, dass Anwenderebenen der Ebenengruppe a) synchron zu einer der Systemebenen der Ebenengruppe a) laufen.

Ein Ausführungsbeispiel der Erfindung ist in der Zeichnung dargestellt und wird im Folgenden erläutert.

Dabei zeigen:
- FIG 1: die wesentlichen Ablaufebenen einer klassischen speicherprogrammierbaren Steuerung,
- FIG 2: die wesentlichen Ablaufebenen einer Bewegungssteuerung,
- FIG 3: die erfindungsgemäße industrielle Steuerung,
- FIG 4: das Ablaufebenenmodell dieser industriellen Steuerung,
- FIG 5: ein Ausführungsbeispiel für das Zuladen von Anwenderprogrammen in die Anwenderebenen,
- FIG 6: ein Ausführungsbeispiel für den Gebrauch und den Mechanismus des Wait_for_Condition-Befehls, im Ablaufebenenmodell der erfindungsgemäßen industriellen Steuerung,
- FIG 7: in einer Schemadarstellung Möglichkeiten, wie der Grundtakt für die industrielle Steuerung gewonnen wird und
- FIG 8: zeigt als OO(objektorientiert)-Strukturdiagramm ein Technologiepaket, bestehend aus Code-Anteil, Parameter, Firmware-Konfiguration, Technologieobjekttyp, Sprachmechanismen und Deklarationsteil.

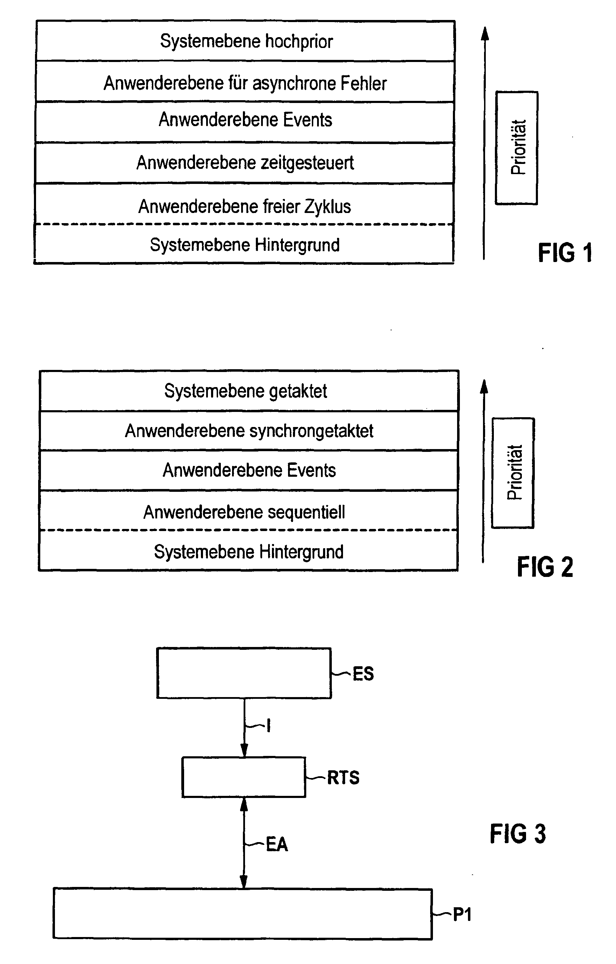

In der Darstellung gemäß FIG 1 sind die wesentlichen Ablaufebenen einer klassischen speicherprogrammierbaren Steuerung (SPS), angeordnet nach ihrer Priorität, gezeigt. Der Prioritätsanstieg ist dabei durch einen Pfeil symbolisiert. In der niederpriorsten Ebene werden, wie durch eine gestrichelte Linie angedeutet, zwei unterschiedliche Aufgaben, nämlich ein freier Zyklus, d.h. "Anwenderebene freier Zyklus" und eine Hintergrund-Systemebene, d.h. "Systemebene Hintergrund" abgewickelt. Der Hintergrund-Systemebene sind z.B. Kommunikationsaufgaben zugeordnet. Bei einer folgenden Anwenderebene, bezeichnet als "Anwenderebene zeitgesteuert", ist der Aufruftakt der Tasks bzw. der Programme dieser Ebene parametrierbar. Es erfolgt eine Überwachung dahingehend, ob die Bearbeitung eines Anwenderprogrammes dieser getakteten Ebene rechtzeitig abgeschlossen ist, bevor das Startereignis erneut auftritt. Läuft die Taktzeit ab, ohne dass das Anwenderprogramm der zugeordneten Ebene fertig abgearbeitet ist, wird eine entsprechende Task einer prioritätsmäßig übernächsten "Anwenderebene für asynchrone Fehler" gestartet. In dieser "Anwenderebene für asynchrone Fehler" kann der Anwender die Behandlung von Fehlerzuständen ausprogrammieren.
Auf die "Anwenderebene zeitgesteuert" folgt eine "Anwenderebene Events". Die Reaktion auf externe oder interne Ereignisse (Events) erfolgt innerhalb der "Anwenderebene Events". Ein typisches Beispiel für ein solches Ereignis ist das Schalten eines binären bzw. digitalen Eingangs, wodurch typischerweise ein Ereignis ausgelöst wird. In einer "Systemebene hochprior" liegen die Aufgaben des Betriebssystems, welche die Arbeitsweise der programmierbaren Steuerung (SPS) sicherstellen.

Die Darstellung gemäß FIG 2 zeigt die wesentlichen Ablaufebenen einer Bewegungssteuerung (MC). Auch hierbei sind die einzelnen Ebenen nach ihrer Priorität hierarchisch, wie durch einen Pfeil symbolisiert, angeordnet. Eine "Systemebene Hintergrund" und eine "Anwenderebene sequentiell" haben eine gleiche Priorität, nämlich die niedrigste. Diese aufgabenmä-ßige Zugehörigkeit ist wie bei FIG 1 durch eine gestrichelte Linie symbolisiert. Die Tasks der "Anwenderebene sequentiell" werden zusammen mit den Tasks der "Systemebene Hintergrund" im Round-Robin-Verfahren abgearbeitet. Typische Tasks der "Systemebene Hintergrund" sind z.B. solche für Kommunikationsaufgaben. In der "Anwenderebene sequentiell" laufen die vom Anwender programmierten Programmteile für die eigentliche Steuerungsaufgabe. Stößt die Steuerung in einem dieser Programmteile auf einen Bewegungs- oder Positionierbefehl, wird ein "Suspend" gesetzt, d.h. das Anwenderprogramm wird an dieser Stelle unterbrochen. In diesem Fall wird ein Befehl synchron genutzt. Die Abarbeitung dieses Bewegungs- oder Positionierbefehls geschieht in einer höchstprioren "Systemebene getaktet". Ein jeder Lageregler oder Interpolator, der in der "Systemebene getaktet" abläuft, führt diesen Bewegungs- bzw. Positionierbefehl aus. Nach Ausführung des Befehls wird in die "Anwenderebene sequentiell" zurückgesprungen und das durch "Suspend" unterbrochene Anwenderprogramm wird durch ein "Resume" an der gleichen Stelle fortgesetzt. Die "Systemebene getaktet" enthält neben den schon erwähnten Lagereglern auch den Interpolationsteil der Steuerung.

Auf die niederpriorste Ebene setzt die "Anwenderebene Events" auf. Hier sind solche Tasks untergebracht, die auf externe oder interne Ereignisse reagieren. Solche Ereignisse können beispielsweise Alarme sein.

In einer folgenden "Anwenderebene synchrongetaktet" laufen synchron getaktete Anwender-Tasks ab, z.B. Reglerfunktionalitäten. Diese Tasks sind synchronisiert zu getakteten Systemfunktionen wie zum Beispiel Interpolator, Lageregler oder zyklische Buskommunikation.
In der Darstellung gemäß FIG 3 wird in Form eines Strukturbildes gezeigt, dass die Steuerung eines technischen Prozesses P1 über das Runtime-System RTS einer industriellen Steuerung erfolgt. Die Verbindung zwischen dem Runtime-System RTS der Steuerung und dem technischen Prozess P1 geschieht bidirektional über die Ein-/Ausgäng EA. Die Programmierung der Steuerung und damit das Festlegen des Verhaltens des Runtime-Systems RTS geschieht im Engineering-System ES. Das Engineering-System ES enthält Werkzeuge für die Konfigurierung, Projektierung und Programmierung für Maschinen bzw. für die Steuerung technischer Prozesse. Die im Engineering-System erstellten Programme werden über den Informationspfad I in das Runtime-System RTS der Steuerung übertragen. Bezüglich seiner Hardware-Ausstattung besteht ein Engineering-System ES üblicherweise aus einem Computersystem mit Graphikbildschirm (z.B. Display), Eingabehilfsmitteln (z.B. Tastatur und Maus), Prozessor, Arbeits- und Sekundärspeicher, einer Einrichtung für die Aufnahme computerlesbarer Medien (z.B. Disketten, CDs) sowie Anschlusseinheiten für einen Datenaustausch mit anderen Systemen (z.B. weiteren Computersystemen, Steuerungen für technische Prozesse) oder Medien (z.B. Internet). Eine Steuerung besteht üblicherweise aus Eingabe- und Ausgabeeinheiten, sowie aus Prozessor und Programmspeicher. Es ist auch vorstellbar, dass die Steuerung eines technischen Prozesses P1 über mehrere Runtime-Systeme RTS von industriellen Steuerungen erfolgt.

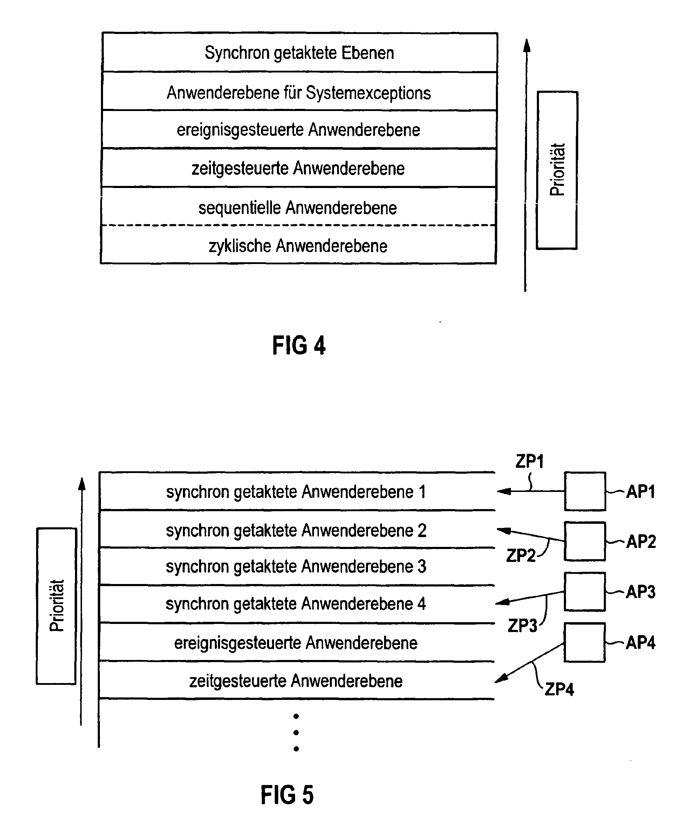

Die Darstellung gemäß FIG 4 zeigt das Ablaufebenenmodell der industriellen Steuerung. Die Priorisierung der Ebenen wird durch einen Pfeil in Richtung zur höchsten Priorität angedeutet. Die niederpriorsten Ebenen sind die "zyklische Anwenderebene" und die "sequentielle Anwenderebene". Diese beiden Ebenen laufen mit der gleichen Priorität. Deshalb sind diese Ebenen in der Darstellung gemäß FIG 4 durch eine gestrichelte Linie getrennt. Die "zyklische Anwenderebene" beinhaltet die "Background Task", die zykluszeitüberwacht ist. In der "sequentiellen Anwenderebene" werden die "Motion Tasks" durchlaufen. "Motion Tasks" sind nicht zykluszeitüberwacht und dienen im Wesentlichen zur Beschreibung sequentieller Abläufe. "Motion Tasks" werden quasiparallel abgearbeitet. Generell enthalten alle Anwenderebenen eine oder mehrere Tasks. Die Tasks nehmen die Anwenderprogramme auf. Die Tasks der "zyklische Anwenderebene" und der "sequentiellen Anwenderebene" werden in einem gemeinsamen Round-Robin-Zyklus abgearbeitet.

Die nächstfolgende Ebene ist die "zeitgesteuerte Anwenderebene". Die Tasks dieser Ebene werden zeitgesteuert aktiviert. Die Zeitsteuerung ist einer Granularität von Millisekunden einstellbar. Auf die "zeitgesteuerte Anwenderebene" folgt die "ereignisgesteuerte Anwenderebene". In dieser Ebene werden nach Erkennen eines User Interrupts so genannte "User Interrupt Tasks" aktiviert. User Interrupt Ereignisse können als logische Verknüpfung von Prozessereignissen und/oder internen Zuständen formuliert werden.

Die nächsthöhere Ebene ist die "Anwenderebene für System Exceptions". In dieser "Anwenderebene für System Exceptions" werden System Interrupts überwacht, bei deren Eintreffen so genannte "Exceptions", d.h. Ausnahmefallbehandlungen, generiert werden. In der "Anwenderebene für System Exceptions" gibt es z.B. folgende Tasks, die bei Auftreten eines entsprechenden System Interrupts aktiviert werden:
a) "Time Fault Task", die beim Ansprechen von Zeitüberwachungen aktiviert wird,
b) "Peripheral Fault Task", die z.B. bei Prozess- und Diagnosealarmen aktiviert wird, aber auch bei Stationsausfall oder Stationswiederkehr,
c) "System Fault Task", die bei allgemeinen Systemfehlern aktiviert wird,
d) "Program Fault Task", die bei Programmierfehlern (z.B. Division durch Null) aktiviert wird,
e) "Time Fault Background Task", die beim Ansprechen der Zykluszeitüberwachung der Background Task aktiviert wird und
f) "Technological Fault Task", die bei Technologiefehlern aktiviert wird.

Als nächstes folgt die Ebenengruppe "synchron getaktete Ebenen". Diese Ebenengruppe besitzt die höchste Priorität im Ablaufebenenmodell. Die einzelnen Ebenen dieser Ebenengruppe können untereinander weitere Priorisierungen aufweisen. Die Ebenengruppe "synchron getaktete Ebenen" besteht aus mindestens einer Systemebene und mindestens einer Anwenderebene. Die Systemebenen beinhalten die Systemfunktionen wie z.B. Lageregler oder Interpolator. In die Anwenderebenen dieser Ebenengruppe können von einem Anwender flexibel Anwenderprogramme (AP1 - AP4; FIG 5) zugeladen werden.

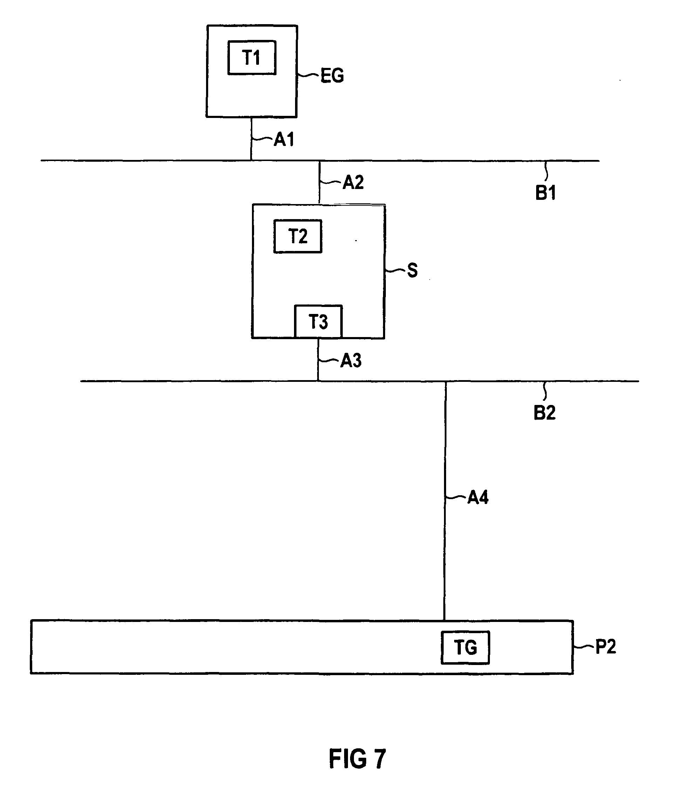

Für die Taktung der "synchron getakteten Ebenen" gibt es eine Reihe unterschiedlicher Taktgenerierungsmöglichkeiten. Der Grundtakt kann z.B. aus einem internen Timer (T1; FIG 7) kommen oder aus einem internen Takt (T3; FIG 7) eines Kommunikationsmediums (z.B. Profibus) oder aber der Takt kann auch aus einem Prozessereignis des technologischen Prozesses abgeleitet werden. Ein solches Prozessereignis kann z.B. die Taktrate (TG; FIG 7) eines Vorgangs an einer Produktionsmaschine oder Verpackungsmaschine sein. Anwenderebenen der Ebenengruppe "synchron getaktete Ebenen" können dabei basierend auf dem Grundtakt getaktet werden, sie können aber auch synchron zu einer der Systemebenen der Ebenengruppe "synchron getaktete Ebenen" laufen. Die Anwendertasks dieser zu einer Systemebene synchronen Anwenderebene haben somit eine synchrone, d.h. deterministische Beziehung zu einer vom Anwender flexibel festlegbaren Systemebene. Das hat den Vorteil, dass deterministische Reaktionen auf Systemtasks (Systemtasks laufen in den Systemebenen), die der Anwender in seinen Anwendertasks programmiert hat, die in den Anwenderebenen der Ebenengruppe "synchron getaktete Ebenen" laufen, vom System garantiert werden. Das heißt z.B., dass das System garantiert, dass diese "synchrone Anwenderebene" entsprechend beispielhaft vor dem Interpolator aktiviert wird oder aber auch vor einer beliebigen anderen Systemfunktion.

Die "zeitgesteuerte Anwenderebene", die "ereignisgesteuerte Anwenderebene", die "sequentielle Anwenderebene", die "zyklische Anwenderebene" sowie die "Anwenderebene für System Exceptions" sind optional.

Die Task der "zyklischen Anwenderebene" (Background Task) ist zykluszeitüberwacht. Die "Motion Tasks" dagegen sind nicht zykluszeitüberwacht und dienen im wesentlichen zur Beschreibung sequentieller Abläufe. Das heißt, das vorliegende Ablaufebenenmodell unterstützt einen Anwender sowohl bei der Programmierung von sequentiellen Abläufen als auch bei der Ereignisprogrammierung. Es können somit synchrone Ereignisse als auch asynchrone Ereignisse durch die Programmierung erfasst werden. In die Anwenderebenen sind die vom Anwender erstellten Anwenderprogramme (AP1 - AP4; FIG 5) zuladbar. Die Anwenderprogramme AP1 bis AP4 werden üblicherweise mit Hilfe einer Programmierumgebung des Engineering-Systems (ES; FIG 3) erstellt.

Die Darstellung gemäß FIG 5 zeigt ein Ausführungsbeispiel für das Zuladen von Anwenderprogramm in die Anwenderebenen. FIG 5 zeigt exemplarisch eine Ausprägung von Anwenderebenen des Ablaufebenenmodells. Durch die drei Punkte am unteren Rand der Zeichnung ist dargestellt, dass auch noch weitere Anwenderebenen, aber auch Systemebenen vorhanden sein können. Die Priorisierung der Ebenen wird wie im Vorangegangenen durch einen Pfeil in Richtung zur höchsten Priorität angedeutet. Den Anwenderebenen werden die Anwenderprogramme AP1 bis AP4, am rechten Bildrand durch kleine Rechtecke angedeutet, zugeordnet. Die Zuordnung wird dargestellt durch Zuordnungspfeile ZP1 bis ZP4. In den Anwenderebenen befinden sich Tasks, die die zugeladenen Anwenderprogramme AP1 bis AP4 aufnehmen. Diese Tasks werden dann nach einer gewissen Strategie (z.B. sequentiell) durchlaufen bzw. abgearbeitet.

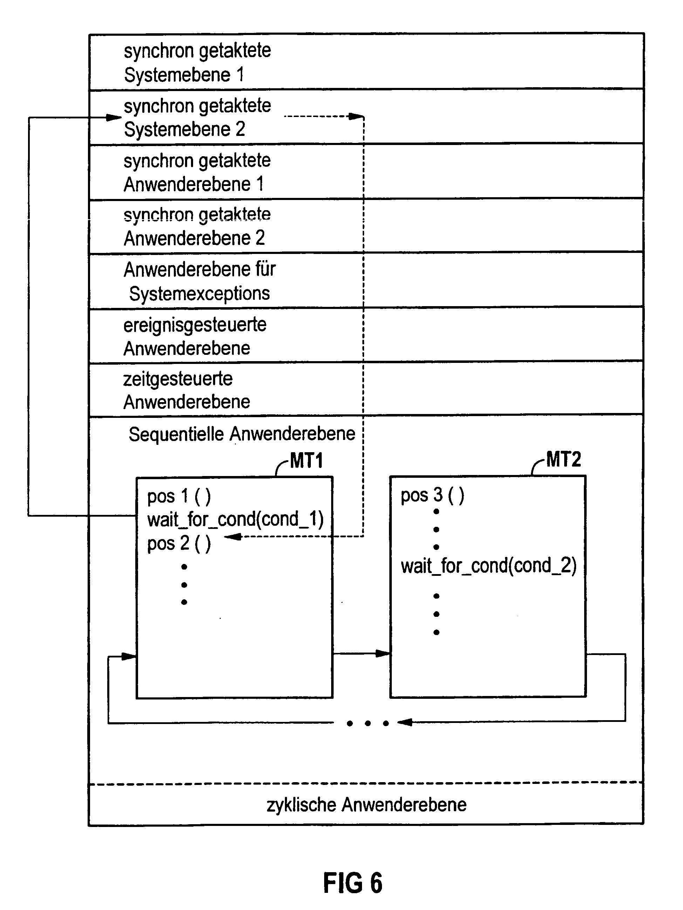

Die Darstellung gemäß FIG 6 zeigt ein Ausführungsbeispiel für den Gebrauch und den Mechanismus des Wait_for_Condition-Befehls, im Ablaufebenenmodell der erfindungsgemäßen industriellen Steuerung. Der Wait_for_Condition-Befehl (in FIG 6 dargestellt als wait_for_cond()) wird in dieser Darstellung exemplarisch in der "sequentiellen Anwenderebene" verwendet. Der Wait_for_Condition-Befehl wird in den vom Anwender erstellten "Motion Tasks" MT1 und MT2 verwendet, die Bestandteil der "sequentiellen Anwenderebene" sind. Die "Motion Tasks" MT1 und MT2 hängen in einem Round-Robin-Zyklus, dargestellt durch den Pfeil von MT1 nach MT2 und durch den abgewinkelten Pfeil von MT2 zu MT1. Die drei Punkte innerhalb dieses Pfeiles deuten an, dass noch weitere "Motion Tasks" im Round-Robin-Zyklus hängen können. Die "Motion Task" MT1 enthält den Wait_for_Condition-Befehl "wait_for_cond(cond_1)", die "Motion Task" MT2 den Wait_for-Condition-Befehl "wait_for_cond(cond_2)". Jeweils drei Punkte, die innerhalb von MT1 bzw. MT2 verwendet werden, deuten an, dass neben den beiden Wait_for_Condition-Befehlen und den drei Positionierbefehlen pos1 () bis pos3 () noch weitere Befehle in den "Motion Tasks" enthalten sein können.

Insgesamt besteht das in FIG 6 exemplarisch dargestellte Ablaufebenenmodell eines Runtime-Systems für eine industrielle Steuerung aus folgenden Ebenen (aufgezählt von niedrigster bis höchster Priorität): "zyklische Anwenderebene", "sequentielle Anwenderebene" (die Tasks dieser beiden Ebenen haben die gleiche Priorität, dargestellt durch die gestrichelte Linie zwischen diesen Ebenen), "zeitgesteuerte Anwenderebene", "ereignisgesteuerte Anwenderebene", "Anwenderebene für Systemexceptions", "synchron getaktete Anwenderebene 2", "synchron getaktete Anwenderebene 1", "synchron getaktete Systemebene 2" und als höchstpriore Ebene eine "synchron getaktete Systemebene 1".

Die Arbeitsweise des Wait_for_Condition-Befehls wird beispielhaft an "wait_for_cond(cond_1)" aus der "Motion Task" MT1 gezeigt. Ist die "Motion Task" MT1 im Round-Robin-Zyklus an der Reihe, werden die Befehle der "Motion Task" MT1 solange bedient, bis die Zeitscheibe abgelaufen ist, oder eine Unterbrechung kommt. Trifft dies zu, wird die "Motion Task" MT2 als nächste Task im Zyklus bedient, usw. Wird in der "Motion Task" MT1 der wait_for_cond(cond_1)-Befehl abgearbeitet, wird die Bedingung cond_1 überprüft. Ist cond_1 = true, also erfüllt, dann wird sofort der nächstfolgende Befehl pos2() ausgeführt und eventuell weitere in MT1 vorhandene Befehle sukzessive abgearbeitet, bis die Kontrolle an die nächste Task abgegeben wird.

Ist die Bedingung cond_1 = false, also nicht erfüllt, wird sofort die "Motion Task" MT1 unterbrochen und im Round-Robin-Zyklus wird MT2 bedient. Die Bedingung cond_1 wird aber in die "synchron getaktete Systemebene 2" eingehängt (angedeutet durch den durchgehenden abgewinkelten Pfeil vom wait_for_cond(cond_1)-Befehl zu der "synchron getakteten Systemebene 2") und im Takt dieser Systemebene auf ihr Erfülltsein überprüft. Ist die Bedingung cond_1 erfüllt, wird im Round-Robin-Zyklus die aktuelle Task verdrängt, d.h. ihr wird die Zeitscheibe entzogen und die Motion Task MT1 wird sofort unmittelbar nach dem wait_for_cond(cond_1) mit dem Positionierbefehl pos2() fortgesetzt. Durch den gestrichelten Pfeil wird der Rücksprung aus der "synchron getakteten Systemebene 2" zum Positionierbefehl pos2(), d.h. zur "sequentiellen Anwenderebene" angedeutet.

Dadurch, dass bei Nichterfülltsein der Bedingung des Wait_for_Condition-Befehls die Überprüfung der Bedingung in einer hochprioren "synchron getakteten Systemebene" stattfindet, und bei Erfülltsein der Bedingung sofort die unterbrochene "Motion Task" fortgesetzt wird, ist es einem Anwender möglich, bei der Programmierung von Bewegungssequenzen extrem zeitkritische Applikationen mit einfachen Sprachmitteln zu spezifizieren. Die Performance und Deterministik wird noch dadurch erhöht, dass beim Überprüfen der Bedingungen in den jeweiligen hochprioren "synchron getakteten Systemebenen" nur aktuell anstehende Bedingungen eingehängt und berücksichtigt werden.

Der hier beschriebene Mechanismus erfordert auch keinen expliziten Event-Handler. Der große Vorteil aus Anwendersicht liegt somit darin, dass der Anwender jetzt in einem sequentiellen Ablaufprogramm auf einer relativ niedrigen Prioritätsebene einer "Motion Task" in seinem Programmfluss hochpriore Ereignisse mit Hilfe von Programmkonstrukten formulieren kann und nicht in ein anderes Programm wechseln muss, das er dann über andere Mechanismen (z.B. per Hand oder interruptgesteuert) auf synchrone Anwendertask abbilden muss, sondern er hat die Möglichkeit, in einem geschlossenen Anwenderprogramm diesen Zyklus "Warten auf hochpriores Ereignis" und "hochpriore Reaktion" auf dieses Ereignis in einem Programm geschlossen zu formulieren.

Die Bedingungen, die in einem Wait_for_Condition-Befehl abgefragt werden, können vom Anwender sehr flexibel und elegant formuliert werden. So kann der Anwender zur Formulierung dieser Bedingungen Programmvariablen aus einem Anwenderprogramm verwenden oder interne Größen der Steuerung oder er kann auch Prozesssignale referenzieren. Diese Größen können dann logisch, arithmetisch oder mit beliebigen Funktionen inhaltlich verknüpft werden, um daraus eine Bedingung zu formulieren. Neben dem hochprioren Abfragen, ob die Bedingung erfüllt ist, kann man sich auch vorstellen, dass bei Erfülltsein der Bedingung auch noch dazugehöriger Programmcode, d.h. eine dahinterliegende Reaktion, die anwenderprogrammierbar ist, hochprior ausgeführt wird. Und dass erst nach der Ausführung dieses Programmcodes der Rücksprung in die niederpriore Ebene erfolgt.

Darstellung gemäß FIG 7 zeigt in einer Schemadarstellung Möglichkeiten, wie der Grundtakt für die industrielle Steuerung gewonnen wird. FIG 7 zeigt exemplarisch eine Kommunikationstopologie, in die die Steuerung S integriert ist. Die Steuerung S ist durch ein Rechteck dargestellt. Durch eine Anschlussleitung A2 ist die Steuerung S mit dem Bus B1 verbunden, an dem über eine Anschlussleitung A1 das externe Gerät EG hängt. Über den Bus B2 erfolgt die Verbindung zum technischen Prozess P2. Der technische Prozess P2 ist am unteren Bildrand durch ein Rechteck dargestellt. Über die Anschlussleitung A3 ist die Steuerung S mit dem Bus B2 verbunden, der wiederum über die Anschlussleitung A4 die Verbindung zum technischen Prozess P2 herstellt.

Die Generierung für den Grundtakt der Steuerung S kann aus unterschiedlichen Taktquellen erfolgen. So z.B. aus einer internen Taktquelle, dargestellt durch den internen Timer T2 der Steuerung S oder auch durch eine externe Taktquelle wie z.B. den Timer T1, der zum externen Gerät EG gehört. Als externe Taktquelle kann aber auch der Grundtakt eines Kommunikationsmediums dienen. Wenn der Bus B2 z.B. durch einen äquidistanten Profibus realisiert wird, dann kann der Takt für die Steuerung aus dem Grundtakt dieses Busses gewonnen werden. In FIG 7 ist dies dargestellt dadurch, dass der Timer T3 direkt an der Anschlussleitung A3 positioniert ist, und diese Anschlussleitung A3 stellt die Verbindung zum Bus B2 her. Die Steuerung hängt somit als Slave am Bus und kann direkt den Bustakt verwenden. Es gibt mehrere Varianten, wie der Takt für die Steuerung aus dem Grundtakt eines Kommunikationsmediums (z.B. eines Busses) gewonnen werden kann:
Zum einen kann die Steuerung S Slave am Bus sein, die Taktinformation kommt dann von extern über den Bus. Zum anderen kann die Steuerung S Master am Bus sein. Die Taktquelle liegt in diesem Fall in der Steuerung S. Für diesen Fall existieren zwei Ausprägungen. Die Taktquelle kann in einer Masterbusanschaltung liegen oder die Taktquelle ist in der Steuerung S, hierbei erfolgt die Einspeisung des Taktes in die Masterbusanschaltung.

Weiterhin kann als externe Taktquelle ein Taktgeber TG dienen, der im technischen Prozess P2 integriert ist. Ein Taktgeber TG in einem technischen Prozess kann z.B. der Arbeitstakt einer Produktionsmaschine oder Verpackungsmaschine sein. In der Darstellung gemäß FIG 7 sind als Kommunikationsmedien beispielhaft Busverbindungen dargestellt. Es können aber als Kommunikationsmedien aber auch Ring-, Stern- oder andere Verbindungsarten gewählt werden, auch wireless-Verbindungen. Aus diesen Verbindungssystemen kann dann der oben genannte Grundtakt abgeleitet werden.

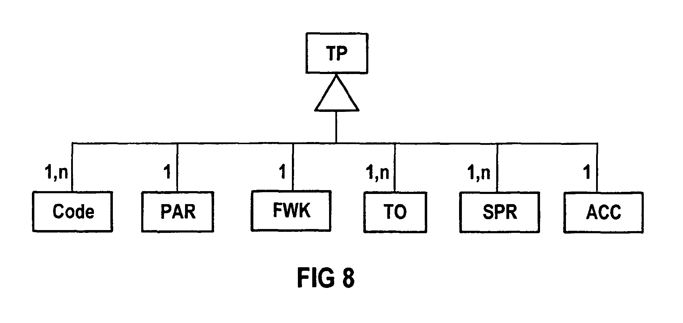

Die Darstellung gemäß FIG 8 zeigt als OO-Strukturdiagramm, wobei die dazugehörigen Kardinalitäten durch eine gängige Ziffern-Notation angezeigt werden, ein Technologiepaket TP mit seinen Bestandteilen:
a) Ablauffähige Code-Teile (Code)
b) Parameter (PAR)
c) Firmware-Konfiguration (FWK)
d) Mindestens einem Technologieobjekttyp (TO)
e) Sprachmechanismen (SPR)
f) Deklarations- und Beschreibungsteil (ACC)

Die 1 bis n Code-Teile (z.B. C-Funktionen) werden beispielsweise für die Bewegungsführung oder die Lageregelung oder für eine andere Technologie verwendet. Die Code-Teile können unter anderem Befehle für Temperaturführung, Temperaturregelung oder für spezielle Technologien wie z.B. Pressen oder Kunststoffverarbeitung beinhalten. Wie diese Code-Teile im Ablaufebenenmodell der Steuerung in die Systemebenen eingehängt werden und in welcher Reihenfolge sie zur Abarbeitung, d.h. Ausführung, gelangen sollen, wird in der Firmware-Konfiguration FWK festgelegt. In dieser steht also die Information, in welche Systemebene ein Code-Teil integriert werden soll und wenn in einer Systemebene mehrere Code-Teile integriert sind, in welcher Reihenfolge diese Code-Teile abgearbeitet werden sollen.

Der Parameter-Teil PAR beinhaltet Oberflächen (Masken, Combo-Boxen, Regeln für die Abhängigkeit der Parameter untereinander, etc.) für das Engineering-System (ES; FIG 3) als auch die Mechanismen für das Runtime-System (RTS; FIG 3), die eine Parametrierung ermöglichen. Damit hat der Anwender die Möglichkeit, Instanzen von Technologieobjekttypen T0 eines Technologiepaketes TP gemäß seinen Anforderungen zu parametrieren.

Mit Hilfe der 1 bis n Sprachmechanismen SPR eines Technologiepakets TP läßt sich der Sprachvorrat des Engineering-Systems (ES; FIG 3) um Befehle und Operatoren, die für das zugrundeliegende Technologiepaket TP mit seinen zugehörenden 1 bis n Technologieobjekttypen T0 adäquat und sinnvoll sind, erweitern. Sprachmechanismen SPR müssen ins Engineering-System (ES; FIG 3) und ins Runtime-System (RTS; FIG 3) der Steuerung geladen werden. Nachdem solche Sprachmechanismen (z.B. "erhöhe Temperatur") im Engineering-System (ES; FIG 3) installiert wurden, sind sie im Compiler und in der Oberfläche bzw. im Browser des Engineering-Systems (ES; FIG 3) bekannt und können vom Anwender in seinen Anwenderprogrammen direkt verwendet werden. Durch eine Plug & Play-Technologie wird sichergestellt, daß im Engineering-System (ES; FIG 3) bekannte Sprachmechanismen auch als ablauffähiges Codestück im Runtime-System (RTS; FIG 3) vorhanden sind. Der Anwender verwendet also die Spezifikation der Sprachmechanismen, um die Implementierung im Runtime-System (RTS; FIG 3) braucht er sich nicht mehr zu kümmern. In der ACC-Komponente eines Technologiepakets TP befindet sich die Beschreibung aller Sprachelemente, die das Technologiepaket TP enthält, die Beschreibung aller Systemvariablen und aller Typen, die im Technologiepaket TP verwendet werden. Die ACC-Komponente entspricht somit einem Deklarations- und Beschreibungsteil für das Technologiepaket TP. Diese ACC-Komponente wird in erster Linie ins Runtime-System (RTS; FIG 3) der Steuerung geladen. Dadurch wird sichergestellt, daß sich alle Informationen bzgl. vorhandener Technologiepaketen TP und Technologieobjekttypen TO im Runtime-System der Steuerung befinden und somit der Anschluß von Bedien- und Beobachtungsgeräten (z.B. Operator Panels) sehr leicht möglich ist.

## Patentansprüche

1. Industrielle, mit einem Runtime-System (RTS) ausgestattete Steuerung (S), insbesondere für Produktionsmaschinen, wobei das Runtime-System (RTS) ein Ablaufebenenmodell enthält, das mehrere Ablaufebenen unterschiedlichen Typs mit unterschiedlicher Priorität aufweist, **dadurch gekennzeichnet, dass** folgende Ablaufebenen vorgesehen sind:
a) eine Ebenengruppe mit aus einem Grundtakt abgeleiteten synchron getakteten Ebenen, bestehend aus mindestens einer Systemebene und mindestens einer Anwenderebene, wobei die Ebenen dieser Ebenengruppe untereinander eine Priorisierung aufweisen können,
b) einer Anwenderebene für Systemexceptions, in der System Interrupts überwacht werden, bei deren Eintreffen Ausnahmefallbehandlungen generiert werden,
c) einer ereignisgesteuerten Anwenderebene, in der nach Erkennen eines User Interrupts User Interrupt Tasks aktiviert werden,
d) einer zeitgesteuerten Anwenderebene, deren Tasks zeitgesteuert aktiviert werden,
e) einer sequentiellen Anwenderebene, in der Motion Tasks durchlaufen werden,
f) einer zyklischen Anwenderebene, welche eine Background Task beinhaltet.

2. Industrielle Steuerung nach Anspruch 1,
**dadurch gekennzeichnet,**
**dass** der Grundtakt des Ablaufebenenmodells entweder aus einem internen Timer (T2) der industriellen Steuerung (S) oder aus einem internen Takt (T3) eines Kommunikationsmediums (B1, B2) oder aus einem externen Gerät (EG) oder von einer Größe (TG), die zum technologischen Prozess (P1, P2) gehört, ableitbar ist.

3. Industrielle Steuerung nach Anspruch 1 oder Anspruch 2,
**dadurch gekennzeichnet,**
**dass** die ereignisgesteuerte Anwenderebene, die zeitgesteuerte Anwenderebene, die sequentielle Anwenderebene, die zyklische Anwenderebene und die Anwenderebene für Systemexceptions optional sind.

4. Industrielle Steuerung nach einem der vorstehenden Ansprüche,
**dadurch gekennzeichnet,**
**dass** die synchronen Ebenen entweder zum Grundtakt übersetzt oder untersetzt oder im Verhältnis 1:1 getaktet sind.

5. Industrielle Steuerung nach einem der vorstehenden Ansprüche,
**dadurch gekennzeichnet,**
**dass** weitere priorisierende Schichtungen innerhalb der Ablaufebenen vorgesehen sind.

6. Industrielle Steuerung nach einem der vorstehenden Ansprüche,
**dadurch gekennzeichnet,**
**dass** optional Anwendertasks beim Systemhochlauf und/oder beim Systemrunterfahren durchlaufbar sind.

7. Industrielle Steuerung nach einem der vorstehenden Ansprüche,
**dadurch gekennzeichnet,**
**dass** in die Anwenderebenen Anwenderprogramme (AP1 - AP4) ladbar sind.

8. Industrielle Steuerung nach Anspruch 7,
**dadurch gekennzeichnet,**
**dass** die Anwenderprogramme (AP1 - AP4) je nach Typ der Anwenderebene zyklusorientiert oder sequentiell programmiert sind.

9. Industrielle Steuerung nach einem der vorstehenden Ansprüche,
**dadurch gekennzeichnet,**
**dass** durch das Hinzuladen von Technologiepaketen (TP) in die Systemebenen die technologische Funktionalität der Steuerung (S) erweiterbar ist.

10. Industrielle Steuerung nach einem der vorstehenden Ansprüche,
**dadurch gekennzeichnet,**
**dass** Mechanismen bereitgestellt sind, die es einem Anwender ermöglichen, im Programmfluss auf eine beliebige Bedingung zu warten, wobei bei Erfülltsein der Bedingung der Programmfluss unmittelbar fortsetzbar ist, bei Nichterfülltsein der Bedingung der Programmfluss solange angehalten wird, bis das Erfülltsein der Bedingung festgestellt wird, wobei beim Warten auf das Erfülltsein der Bedingung die Priorität der Bedingungsüberprüfung im Vergleich zur aktuellen Taskpriorität erhöht wird.

11. Industrielle Steuerung nach Anspruch 10,
**dadurch gekennzeichnet,**
**dass** für die Formulierung der Bedingungen Prozesssignale, interne Signale der Steuerung und Variablen aus Anwenderprogrammen (AP1 - AP4) verwendbar sind.

12. Industrielle Steuerung nach einem der vorstehenden Ansprüche,
**dadurch gekennzeichnet,**
**dass** verschiedene Ablaufebenen zur Verfügung stehen, die in Vielfachen eines Grundtaktes abgearbeitet werden, wobei technologische Funktionen den Ablaufebenen frei zugeordnet werden.

13. Industrielle Steuerung nach einem der vorstehenden Ansprüche,
**dadurch gekennzeichnet,**
**dass** das Runtime-System (RTS) der Steuerung (S) ein Ablaufebenenmodell enthält, das mehrere Ablaufebenen unterschiedlichen Typs mit unterschiedlicher Priorität aufweist, wobei folgende Ablaufebenen vorgesehen sind:
a) eine Ebene, die bei Technologiefehlern aktiviert wird,
b) eine Ebene, die bei Zykluszeitüberwachung der Hintergrund-Tasks aktiviert wird,
c) eine Ebene, die bei Programmfehlern aktiviert wird,
d) eine Ebene, die bei Systemfehlern aktiviert wird,
e) eine Ebene, die bei Fehlern oder Alarmen in der Peripherie aktiviert wird,
f) eine Ebene, die beim Ansprechen von Zeitüberwachungen aktiviert wird,
g) mindestens eine Ebene, die beim Erkennen von Anwender-Interrupts aktiviert wird,
h) eine Interpolatorebene,
i) mindestens eine Ebene für Timer-Interrupts,
j) mindestens eine Ebene für die, vorzugsweise sequentielle, Abarbeitung von Bewegungs-Tasks und
k) eine Ebene für die Hintergrund-Bearbeitung,
wobei weitere Anwendertasks beim Systemhochlauf und/oder beim Systemrunterfahren durchlaufen werden.

14. Industrielle Steuerung nach einem der vorstehenden Ansprüche,
**dadurch gekennzeichnet,**
**dass** Anwenderebenen der Ebenengruppe a) synchron zu einer der Systemebenen der Ebenengruppe a) laufen.

## Claims

1. Industrial controller (S) equipped with a runtime system (RTS), in particular for production machines, the runtime system (RTS) containing a running level model which has a plurality of running levels of different types with different priority, **characterized in that** the following running levels are provided:
a) a group of levels with synchronously clocked levels derived from a basic clock, comprising at least one system level and at least one user level, it being possible for the levels of this group of levels to have prioritizing with respect to one another,
b) a user level for system exceptions, in which system interrupts which generate exceptional conditions when they occur are monitored,
c) an event-controlled user level, in which interrupt tasks are activated after user interrupts are detected,
d) a time-controlled user level, the tasks of which are activated in a time-controlled manner,
e) a sequential user level, in which motion tasks are run through,
f) a cyclical user level, which comprise a background task.

2. Industrial controller according to Claim 1, **characterized in that** the basic clock of the running level model can be derived from an internal timer (T2) of the industrial controller (S) or from an internal clock (T3) of a communication medium (B1, B2) or from an external device (EG) or from a variable (TG) which belongs to the technological process (P1, P2).

3. Industrial controller according to Claim 1 or Claim 2, **characterized in that** the event-controlled user level, the time-controlled user level, the sequential user level, the cyclical user level and the user level for system exceptions are optional.

4. Industrial controller according to one of the preceding claims, **characterized in that** the synchronous levels are either clocked in relation to the basic clock with a step-up or step-down ratio or in the ratio 1:1.

5. Industrial controller according to one of the preceding claims, **characterized in that** further prioritizing stratifications are provided within the running levels.

6. Industrial controller according to one of the preceding claims, **characterized in that** user tasks can optionally be run through during system running-up and/or during system running-down.

7. Industrial controller according to one of the preceding claims, **characterized in that** user programs (AP1 - AP4) can be loaded into the user levels.

8. Industrial controller according to Claim 7, **characterized in that** user programs (AP1 - AP4) which, depending on the type of user level, are programmed in a cycle-oriented or sequential manner.

9. Industrial controller according to one of the preceding claims, **characterized in that** the additional loading of technology packages (TP) into the system levels allows the technological functionality of the controller (S) to be extended.

10. Industrial controller according to one of the preceding claims, **characterized in that** mechanisms which enable a user to wait in the program flow for any desired condition are provided, the program flow being able to continue immediately when the condition is satisfied and the program flow being stopped when the condition is not satisfied, until it is established that the condition has been satisfied, the priority of the checking for the condition being increased in comparison with the current task priority while waiting for the condition to be satisfied.

11. Industrial controller according to Claim 10, **characterized in that** process signals, internal signals of the controller and variables from user programs (AP1 - AP4) can be used for the formulation of the conditions.

12. Industrial controller according to one of the preceding claims, **characterized in that** various running levels which are processed in multiples of a basic clock are available, technological functions being freely assigned to the running levels.

13. Industrial controller according to one of the preceding claims, **characterized in that** the runtime system (RTS) of the controller (S) contains a running level model which has a plurality of running levels of different types with different priority, the following running levels being provided:
a) a level which is activated when there are technological faults,
b) a level which is activated when there is cycle time monitoring of the background tasks,
c) a level which is activated when there are programming faults,
d) a level which is activated when there are system faults,
e) a level which is activated when there are faults or alarms in the peripherals,
f) a level which is activated when time monitors respond,
g) at least one level which is activated when user interrupts are detected,
h) an interpolator level,
i) at least one level for timer interrupts,
j) at least one level for the, preferably sequential, processing of motion tasks and
k) a level for background processing,
further user tasks being run through during system running-up and/or during system running-down.

14. Industrial controller according to one of the preceding claims, **characterized in that** user levels of level group a) run in a synchronous manner to one of the system levels of level group a).

## Revendications

1. Commande industrielle (S) équipée d'un système Runtime (RTS), notamment pour des machines de production, le système Runtime (RTS) contenant un modèle de niveaux d'exécution qui comporte plusieurs niveaux d'exécution de différents types avec différentes priorités, **caractérisée par le fait que** les niveaux d'exécution suivants sont prévus :
a) un groupe de niveaux avec des niveaux soumis à une horloge synchrone déduite de l'horloge fondamentale, constitué d'au moins un niveau de système et au moins un niveau d'utilisateur, les niveaux de ce groupe de niveaux pouvant avoir des priorités les uns par rapport aux autres,
b) un niveau d'utilisateur pour des exceptions de système, dans lequel on surveille des interruptions de système à l'arrivée desquelles des traitements d'exceptions sont produits,
c) un niveau d'utilisateur à commande événementielle, dans lequel des tâches d'interruption d'utilisateur sont activées lors de la détection d'une interruption d'utilisateur,
d) un niveau d'utilisateur à commande temporelle, dont les tâches sont activées suivant une commande temporelle,
e) un niveau d'utilisateur séquentiel, dans lequel des tâches de mouvement sont exécutées,
f) un niveau d'utilisateur cyclique, qui contient une tâche de fond.

2. Commande industrielle selon la revendication 1,
**caractérisée par le fait que**
l'horloge fondamentale du modèle de niveaux d'exécution est déduite soit d'un temporisateur interne (T2) de la commande industrielle (S), soit d'une horloge interne (T3) d'un moyen de communication (B1, B2), soit d'un appareil externe (EG), soit d'une grandeur (TG) qui appartient au processus technologique (P1, P2).

3. Commande industrielle selon la revendication 1 ou la revendication 2,
**caractérisée par le fait que** le niveau d'utilisateur à commande événementielle, le niveau d'utilisateur à commande temporelle, le niveau d'utilisateur séquentiel, le niveau d'utilisateur cyclique et le niveau d'utilisateur pour des exceptions de système sont optionnels.

4. Commande industrielle selon l'une des revendications précédentes,
**caractérisée par le fait que**
les niveaux synchrones sont soumis à une horloge qui, par rapport à l'horloge fondamentale, est soit multipliée, soit réduite, soit dans un rapport 1/1.

5. Commande industrielle selon l'une des revendications précédentes,
**caractérisée par le fait que**
d'autres structures en couches avec des priorités sont prévues à l'intérieur des niveaux d'exécution.

6. Commande industrielle selon l'une des revendications précédentes,
**caractérisée par le fait que**,
en option, des tâches d'utilisateur sont exécutables lors du démarrage du système et/ou lors de l'arrêt du système.

7. Commande industrielle selon l'une des revendications précédentes,
**caractérisée par le fait que**,
dans les niveaux d'utilisateur, des programmes d'utilisateurs (AP1 à AP4) sont chargeables.

8. Commande industrielle selon la revendication 7,
**caractérisée par le fait que**
les programmes d'utilisateur (AP1 à AP4) sont programmés cycliques ou séquentiels selon le type du niveau d'utilisateur.

9. Commande industrielle selon l'une des revendications précédentes,
**caractérisée par le fait que**
la fonctionnalité technologique de la commande (S) peut être étendue grâce au chargement supplémentaire de paquets technologiques (TP) dans les niveaux de système.

10. Commande industrielle selon l'une des revendications précédentes,
**caractérisée par le fait que**
des mécanismes sont proposés, lesquels permettent à un utilisateur d'attendre la vérification d'une certaine condition dans le déroulement du programme de telle sorte que, si la condition est vérifiée, le déroulement du programme peut se poursuivre immédiatement et, si la condition n'est pas vérifiée, le déroulement du programme est arrêté jusqu'à ce que la vérification de la condition soit constatée, la priorité du test de la condition en comparaison de la priorité de tâche actuelle étant augmentée lors de l'attente de la vérification de la condition.

11. Commande industrielle selon la revendication 10,
**caractérisée par le fait que**,
pour la formulation des conditions, des signaux de processus, des signaux internes de la commande et des variables issues des programmes d'utilisateur (AP1 à AP4) peuvent être utilisés.

12. Commande industrielle selon l'une des revendications précédentes,
**caractérisée par le fait que**
différents niveaux d'exécution sont disponibles, lesquels sont traités selon des multiples d'une horloge fondamentale, des fonctions technologiques étant associées librement aux niveaux d'exécution.

13. Commande industrielle selon l'une des revendications précédentes,
**caractérisée par le fait que**
le système Runtime (RTS) de la commande (S) contient un modèle de niveaux d'exécution qui comporte plusieurs niveaux d'exécution de différents types avec différentes priorités, les niveaux d'exécution suivants étant prévus:
a) un niveau qui est activé lors d'erreurs technologiques,
b) un niveau qui est activé lors d'une surveillance de temps de cycle des tâches de fond,
c) un niveau qui est activé lors d'erreurs de programme,
d) un niveau qui est activé lors d'erreurs de système,
e) un niveau qui est activé lors d'erreurs ou d'alarmes dans la périphérie,
f) un niveau qui est activé lors d'une réaction de surveillances de temps,
g) au moins un niveau qui est activé lors de la détection d'interruptions d'utilisateur,
h) un niveau d'interpolateur,
i) au moins un niveau pour des interruptions de temporisateur,
j) au moins un niveau pour le traitement, de préférence séquentiel, de tâches de mouvement, et
k) un niveau pour le traitement de fond,
d'autres tâches d'utilisateur étant exécutées lors du démarrage du système et/ou lors de l'arrêt du système.

14. Commande industrielle selon l'une des revendications précédentes,
**caractérisée par le fait que**
des niveaux d'utilisateur du groupe de niveaux a) sont exécutés de manière synchrone à l'un des niveaux de système du groupe de niveaux a).
